# FASCICULE DE BREVET EUROPEEN

(11) **EP 1 512 582 B1**
(45) Date de publication et mention de la délivrance du brevet: **14.01.2009**
(21) Numéro de dépôt: 04292163.5
(22) Date de dépôt: 08.09.2004
(51) Int. Cl.: B60R 13/04, B60R 13/02, B60R 19/44

(54) **Bandeau destiné à être encliqueté sur une pièce de carrosserie d'un véhicule automobile**
Band eingerastet in einem Karosserieteil eines Fahrzeuges
Snap-fitted strip to a car body member of a vehicle

(30) Priorité: 08.09.2003 FR 0310579
(43) Date de publication de la demande: 09.03.2005
(73) Titulaire: COMPAGNIE PLASTIC OMNIUM, 69007 Lyon (FR)
(72) Inventeur: Falandry, Nicolas, 69003 Lyon (FR)
(74) Mandataire: Remy, Vincent Noel Paul

(56) Documents cités:
- EP-A- 0 703 008
- US-A1- 2003 082 310
- PATENT ABSTRACTS OF JAPAN vol. 012, no. 450 (C-547), 25 novembre 1988 (1988-11-25) & JP 63 175666 A (TOYOTA MOTOR CORP), 20 juillet 1988 (1988-07-20)

## Description

La présente invention concerne un bandeau destiné à être encliqueté sur une pièce de carrosserie d'un véhicule automobile.

On connaît déjà les bandeaux de protection qui sont rapportés sur les pièces de carrosserie pour les protéger ou les agrémenter. Ces bandeaux sont souvent encliquetés en position d'utilisation à l'aide de pattes d'encliquetages dont la forme est bien connue.

Lorsqu'un tel bandeau doit être peint de la même couleur que la pièce de carrosserie, une technique consiste à le "pré-encliqueter" sur la pièce de carrosserie qui le reçoit, dans une position intermédiaire dans laquelle il est maintenu à distance de la pièce, afin que l'opération de peinture n'entraîne aucune marque ni accumulation de peinture à la périphérie du bandeau.

Une fois le bandeau peint, on le pousse contre la pièce de carrosserie et il s'encliquète pour conserver cette position d'utilisation.

Par exemple, on connaît déjà, d'après EP 0 703 008, un bandeau conforme au préambule de la revendication 1.

Bien que cette technique particulièrement simple soit efficace à l'égard des marques de peinture, dans la pratique, elle peut poser une difficulté du fait que certains bandeaux, lors du passage en étuve à 80°C, ne demeurent pas en position intermédiaire mais soit s'inclinent et empêchent l'application de la peinture sur la pièce de carrosserie sous-jacente, soit tombent de la pièce de carrosserie.

La présente invention vise à résoudre ce problème en proposant un bandeau simple et économique qui conserve sa position intermédiaire en vue de sa peinture, même lors d'un passage en étuve.

La présente invention a pour objet un bandeau destiné à être encliqueté sur une pièce de carrosserie d'un véhicule automobile, comportant des languettes d'encliquetage, aptes à se déformer de manière élastique en se débattant angulairement, et à s'encliqueter dans des formes d'encliquetage prévues sur la pièce de carrosserie, de manière à maintenir le bandeau sur la pièce de carrosserie dans deux positions, à savoir une position intermédiaire dans laquelle le bandeau est maintenu à distance de la pièce de carrosserie et une position d'utilisation dans laquelle le bandeau est appliqué contre la pièce de carrosserie, chaque languette s'encliquetant dans la même forme d'encliquetage dans les deux positions du bandeau, par mise sous contrainte de la languette par déformation élastique, **caractérisé en ce que** les languettes sont conformées de manière que, à température constante, le débattement angulaire de chaque languette est plus élevé lorsque le bandeau se trouve en position intermédiaire que lorsqu'il se trouve en position d'utilisation.

Grâce à l'invention, le bandeau peut être mis en place dans la position intermédiaire pour l'opération de peinture. Ses languettes le maintiennent dans cette position pendant toute l'opération de peinture, y compris lors du passage en étuve, car même en cas de déformation du bandeau en raison du chauffage, le débattement angulaire des languettes est suffisant pour compenser les variations dimensionnelles résultant des déformations.

Par exemple, si le chauffage du bandeau a pour effet de rapprocher les languettes alors que celles-ci s'encliquètent vers l'extérieur, la conformation des languettes selon l'invention peut consister à les écarter dans leur partie coopérant avec les formes d'encliquetage de la pièce de carrosserie, afin que le débattement angulaire des languettes soit accru lorsque le bandeau est en position intermédiaire. L'effet du chauffage se limite donc à réduire le débattement angulaire des languettes, mais celles-ci demeurent suffisamment déformées pour conserver leur élasticité et assurer l'encliquetage, et donc assurer le maintien du bandeau sur la pièce de carrosserie.

Ainsi, selon un mode de réalisation particulier de l'invention, les languettes présentent une déviation par rapport à la direction selon laquelle le bandeau doit être encliqueté sur la pièce de carrosserie.

De manière optionnelle, le bandeau selon l'invention comporte des languettes courtes ne servant qu'à la fixation du bandeau en position d'utilisation.

L'invention concerne également un ensemble d'une peau de pare-chocs et d'un bandeau tel que défini precedement **caractérisé en ce que** la peau de pare-chocs comporte des formes d'encliquetages destinées à coopérer avec des languettes d'encliquetage d'un bandeau tel que décrit précédemment.

Afin de mieux faire comprendre l'invention, on va maintenant en décrire un mode de réalisation, donné à titre d'exemple et ne présentant aucun caractère limitatif, à l'aide des dessins annexés dans lesquels :
- la figure 1 est une vue en perspective de trois quart avant de la moitié d'un bandeau selon un mode de réalisation de l'invention, en position intermédiaire sur la moitié d'une peau de pare-chocs,
- la figure 2 est une vue en perspective de trois quart arrière du même bandeau en position d'utilisation,
- la figure 3 est une section transversale du bandeau selon le plan III-III de la figure 2,
- la figure 4 est une section transversale du bandeau selon le plan IV-IV de la figure 2,
- la figure 5 est une vue similaire à la figure 4 dans laquelle le bandeau se trouve en position intermédiaire,
- la figure 6 est une vue similaire aux figures 4 et 5, dans laquelle le bandeau se trouve en position de repos.

Le bandeau 1 représenté sur le dessin est un bandeau de pare-chocs, qui est monté sur une peau de pare-chocs 2. Ces deux pièces sont destinées à être peintes avec la même peinture.

Le bandeau 1 comporte des languettes d'encliquetage 3 et 4, aptes à se déformer de manière élastique en se débattant angulairement. Ces languettes d'encliquetage 3, 4 coopèrent avec des formes d'encliquetage prévues sur la peau de pare-chocs, ici sous la forme d'un rebord intérieur 5 d'une ouverture 6.

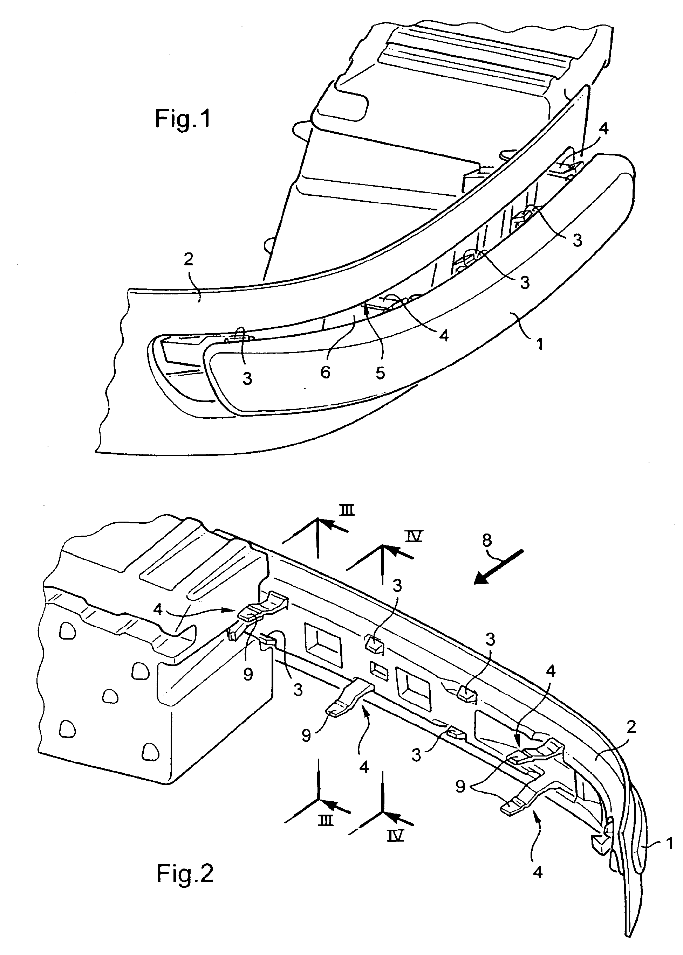

Les languettes 3 sont courtes et ne servent qu'à la fixation du bandeau en position d'utilisation, lorsqu'il est plaqué contre la peau de pare-chocs, comme représenté sur les figures 2, 3 et 4. A cet effet, chaque languette 3 est conformée en un crochet, forme courante pour réaliser un encliquetage.

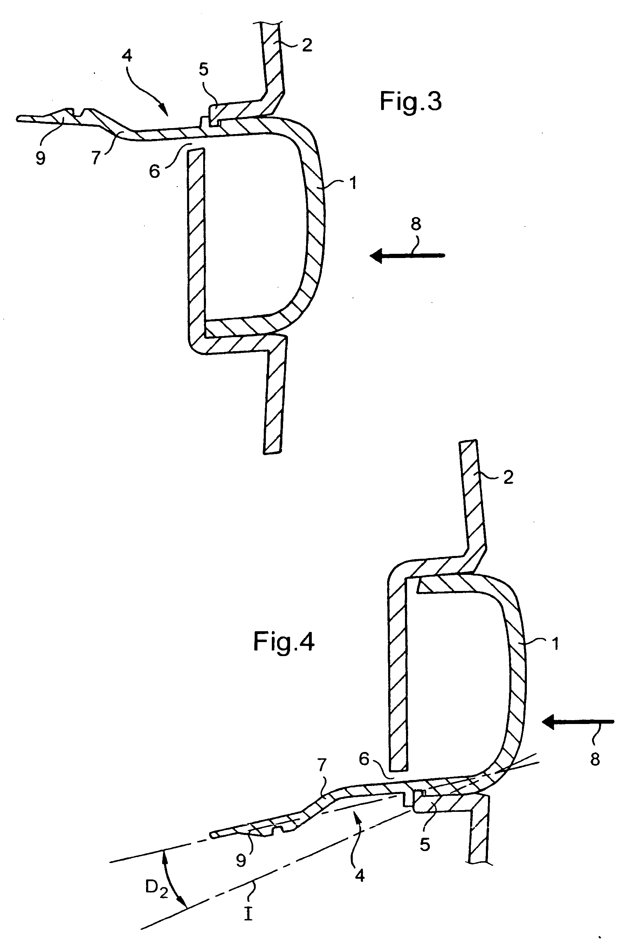

En revanche, les languettes 4 sont plus longues que les languettes 3 et comportent, dans le prolongement d'une première forme en crochet identique à celle des languettes 3, une rallonge 9 portant une seconde forme en crochet, que l'on voit bien sur les figures 3 et 4.

Compte tenu de leur fonction de maintien provisoire du bandeau en position intermédiaire, on comprend qu'il n'est pas nécessaire que toutes les languettes soient des languettes longues 4. Dans l'exemple décrit, le demi-bandeau comporte quatre languettes longues 4, sur un total de dix languettes 3, 4.

Comme on le voit mieux sur les figures 3 et 4, chaque rallonge d'une languette longue 4 forme un coude 7 qui marque une déviation par rapport à la direction 8 selon laquelle le bandeau doit être encliqueté sur la peau de pare-chocs 2. En d'autres termes, la rallonge 9 de la languette s'éloigne du bandeau 1 en divergeant vers l'extérieur.

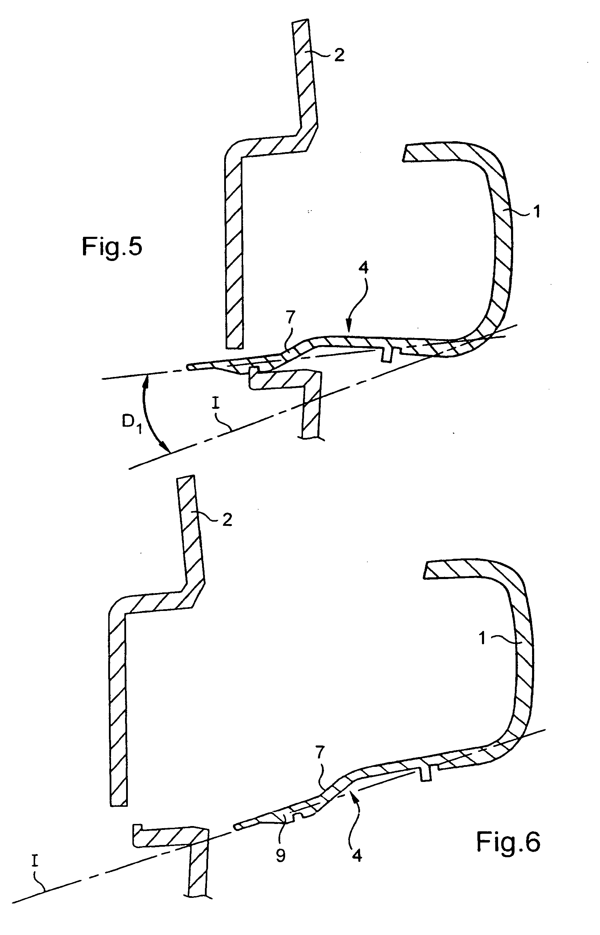

De ce fait, comme on peut le voir sur la figure 5, la seconde forme en crochet de la languette longue 4 se trouve décalée par rapport au bourrelet d'encliquetage avec lequel elle doit coopérer lorsque le bandeau est en position intermédiaire, de sorte que cet encliquetage engendre un débattement angulaire de la languette qui est plus important que lorsque le bandeau est en position d'utilisation.

Les figures 4, 5 et 6 illustrent le débattement angulaire de l'une des languettes longues 4, lorsque le bandeau 1 est respectivement en position d'utilisation (figure 4), en position intermédiaire (figure 5) et en position de repos (figure 6).

On a représenté sur la figure 6 une position initiale I de la languette 4, lorsque le bandeau 1 n'est pas encliqueté sur la peau de pare-chocs 2. Le débattement angulaire est mesuré par rapport à cette position initiale I. Ainsi, sur cette figure 6, le débattement angulaire est nul.

On a représenté sur la figure 5 le bandeau 1 en position intermédiaire. Le débattement angulaire de la languette 4 dans cette position intermédiaire est noté D1 sur cette figure.

On a représenté sur la figure 4 le bandeau 1 en position d'utilisation. Le débattement angulaire de la languette 4 dans cette position d'utilisation est noté D2 sur cette figure.

Ainsi, grâce au coude 7, le débattement angulaire D1 de la languette 4 dans la position intermédiaire est plus important que le débattement angulaire D2 de la languette 4 dans la position d'utilisation.

La languette est donc davantage contrainte et davantage déformée en position intermédiaire.

Grâce à cette augmentation de contrainte et de déformation, le bandeau 1 peut passer en étuve pour sa peinture sans quitter sa position intermédiaire car toute déformation inverse de la languette 4 résultant de son chauffage est compensée par l'excès de déformation initiale.

La peinture concomitante du bandeau 1 et de la peau de pare-chocs 2 ne pose ainsi aucune difficulté. Après la peinture, le bandeau 1 peut être poussé contre la peau de pare-chocs 2, comme cela est connu, pour s'encliqueter en position d'utilisation.

Il est bien entendu que le mode de réalisation décrit ci-dessus ne présente aucun caractère limitatif et qu'il pourra recevoir toute modification désirable sans sortir pour cela du cadre de l'invention, tel que défini par les revendications qui suivent.

## Revendications

1. Bandeau (1) destiné à être encliqueté sur une pièce de carrosserie (2) d'un véhicule automobile, comportant des languettes d'encliquetage (3, 4), aptes à se déformer de manière élastique en se débattant angulairement, et à s'encliqueter dans des formes d'encliquetage (5) prévues sur la pièce de carrosserie (2), de manière à maintenir le bandeau (1) sur cette pièce de carrosserie (2) dans deux positions, à savoir une position intermédiaire dans laquelle le bandeau (1) est maintenu à distance de la pièce de carrosserie (2) et une position d'utilisation dans laquelle le bandeau (1) est appliqué contre la pièce de carrosserie (2), chaque languette (4) s'encliquetant dans la même forme d'encliquetage (5) dans les deux positions du bandeau (1), par mise sous contrainte de la languette (5) par déformation élastique, **caractérisé en ce que** les languettes (4) sont conformées de manière que, à température constante, le débattement angulaire (D1, D2) de chaque languette (4) est plus élevé lorsque le bandeau (1) se trouve en position intermédiaire que lorsqu'il se trouve en position d'utilisation.

2. Bandeau (1) selon la revendication 1, dans lequel les languettes (4) présentent une déviation (7) par rapport à la direction (8) selon laquelle le bandeau (1) doit être encliqueté sur la pièce de carrosserie (2).

3. Bandeau (1) selon la revendication 1 ou 2, comportant des languettes courtes (3) ne servant qu'à la fixation du bandeau (1) en position d'utilisation.

4. Ensemble d'une peau de pare-chocs (2) et d'un bandeau (1) selon l'une quelconque des revendications 1 à 3, dans lequel la peau de pare-chocs (2) comporte des formes d'encliquetages (5) destinées à coopérer avec les languettes d'encliquetage (4) du bandeau (1).

## Claims

1. A capping strip (1) designed to be snap-fastened to a bodywork part (2) of a motor vehicle, the strip including snap-fastener tongues (3, 4) suitable for deforming elastically by deflecting angularly, and for snap-fastening in snap-fastener shapes (5) provided in the bodywork part (2) so as to hold the strip (1) on said bodywork part (2) in two positions, namely an intermediate position in which the strip (1) is held at a distance from the bodywork part (2), and a utilization position in which the strip (1) is pressed against the bodywork part (2), each tongue (4) snapping in a given snap-fastener shape (5) in both of the positions of the strip (1) by putting the tongue (4) under stress by elastic deformation, the capping strip being **characterized in that** the tongues (4) are shaped in such a manner that, at constant temperature, the angular travel (D1, D2) of each tongue (4) is greater when the strip (1) is in the intermediate position than when it is in the utilization position.

2. A capping strip (1) according to claim 1, wherein the tongues (4) present a deflection (7) relative to the direction (8) in which the strip (1) is to be snap-fastened to the bodywork part (2).

3. A capping strip (1) according to claim 1 or claim 2, including short tongues (3) that serve to fasten the strip (1) in the utilization position only.

4. An assembly comprising a bumper skin (2) and a capping strip (1) according to any one of claims 1 to 3, wherein the bumper skin (2) includes snap-fastener shapes (5) for co-operating with the snap-fastener tongues (4) of the strip (1).

## Patentansprüche

1. Band (1), dazu bestimmt, auf einem Karosserieteil (2) eines Kraftfahrzeugs eingerastet zu werden, umfassend Einrastfedern (3, 4), dazu geeignet, sich auf elastische Weise durch winkelförmiges Ausfedern zu verformen, und in auf dem Karosserieteil (2) vorgesehenen Einrastformen (5) einzurasten, um das Band (1) auf diesem Karosserieteil (2) in zwei Stellungen zu halten, das heißt eine Zwischenstellung, in der das Band (1) in Abstand zum Karosserieteil (2) gehalten wird, und eine Einsatzstellung, in der das Band (1) am Karosserieteil (2) anliegt, wobei jede Feder (4) in der gleichen Einrastform (5) in den beiden Stellungen des Bandes (1) einrastet, durch Belastung der Feder (5) durch elastische Verformung, **dadurch gekennzeichnet, dass** die Federn (4) so gestaltet sind, dass bei konstanter Temperatur das winkelförmige Ausfedern (D1, D2) von jeder Feder (4) größer ist, wenn sich das Band (1) in der Zwischenstellung befindet, als wenn es sich in der Einsatzstellung befindet.

2. Band (1) nach Anspruch 1, wobei die Federn (4) eine Abweichung (7) zur Richtung (8) aufweisen, in der das Band (1) auf dem Karosserieteil (2) eingerastet werden muss.

3. Band (1) nach Anspruch 1 oder 2, umfassend kurze Federn (3), die ausschließlich zur Befestigung des Bandes (1) in der Einsatzstellung dienen.

4. Gesamtheit aus einer Stoßfängerhaut (2) und einem Band (1) nach einem der Ansprüche 1 bis 3, wobei die Stoßfängerhaut (2) Einrastformen (5) umfasst, die zum Zusammenwirken mit den Einrastfedern (4) des Bandes (1) bestimmt sind.
